# EUROPÄISCHE PATENTSCHRIFT

(11) **EP 2 881 310 B1**
(45) Veröffentlichungstag und Bekanntmachung des Hinweises auf die Patenterteilung: **05.04.2017**
(21) Anmeldenummer: 14196287.8
(22) Anmeldetag: 04.12.2014
(51) Int. Cl.: B62D 29/00, B62D 33/04

(54) **Isolierpaneel für einen Nutzfahrzeugaufbau und Nutzfahrzeug mit einem Nutzfahrzeugaufbau**
Body for a utility vehicle with a multi-layer panel
Corps de boîte pour un véhicule utilitaire avec un panneau multicouche

(30) Priorität: 04.12.2013 EP 13195689
(43) Veröffentlichungstag der Anmeldung: 10.06.2015
(73) Patentinhaber: Schmitz Cargobull AG, 48341 Altenberge (DE)
(72) Erfinder: Schlumm, Michael, 48683 Ahaus (DE); Beelmann, Reinhard, 45721 Haltern am See (DE); Schmitz, Peter, 48341 Altenberge (DE)
(74) Vertreter: Cohausz & Florack

(56) Entgegenhaltungen:
- DE-A1- 1 704 581
- DE-A1-102005 022 868
- DE-A1-102010 051 612
- DE-U1-202007 014 441
- US-A1- 2008 174 147

## Beschreibung

Die Erfindung betrifft ein Isolierpaneel zur Verwendung für einen Nutzfahrzeugaufbau und ein Nutzfahrzeug, das zum Transport von temperaturempfindlichen Gütern bestimmt ist und dazu einen Nutzfahrzeugaufbau mit einem Laderaum besitzt, in dem das jeweilige Gut während des Transports verstaut ist.

Um einerseits eine ausreichende thermische Isolierung und andererseits eine für den rauen Alltagseinsatz ausreichende Steifigkeit zu gewährleisten, weisen Isolierpaneele der hier in Rede stehenden Art üblicherweise eine der Umgebung des jeweiligen Fahrzeugaufbaus zugeordnete äußere Decklage, eine innere Decklage, die dem von dem Fahrzeugaufbau umgrenzten Laderaum zugeordnet ist, und eine zwischen diesen Decklagen angeordnete Kernlage aus einem thermisch isolierenden Material auf. Die Decklagen übernehmen dabei nicht nur eine aussteifende Funktion, sondern dienen in der Regel auch als Dampfsperre, um ein Eindringen von Feuchtigkeit oder sonstigen Medien aus der Umgebung des Isolierpaneels in dessen in der Regel poröse und dementsprechend saugfähige Kernlage zu vermeiden. Gleichzeitig sollen die Decklagen auch so gestaltet sein, dass sie ein gutes optisches Aussehen bieten. Um diese Anforderungen zu erfüllen, bestehen die innere und die äußere Decklage üblicherweise aus mehr als zwei aufeinander liegenden Schichten.

Ein Beispiel für ein Isolierpaneel, das als mehrlagiger Verbund ausgebildet und speziell zur Verwendung in isolierten Nutzfahrzeuganhängern, Containern oder sonstigen isolierten Abteilen bestimmt ist, ist in der EP 1 667 890 B1 und DE202007014441U beschrieben. Das Isolierpaneel umfasst dabei mindestens zwei im Wesentlichen gasundurchlässige Deckplatten.

Die Deckplatte des bekannten Isolierpaneels, die im Gebrauch dem jeweils von dem Isolierpaneel gegenüber der Umgebung abzuschirmenden Raum zugeordnet ist, ist als formsteife Laminatdeckplatte ausgebildet. Hierzu weist diese Decklage eine gasundurchlässige Barriereschicht, die beispielsweise durch eine dünne Aluminium- oder eine PET-Folie gebildet ist, und wenigstens eine coplanar zur Barriereschicht ausgerichtete Strukturpolymerharzschicht auf, die mit der Barriereschicht verbunden ist. Bei den für die Praxis vorgesehenen Ausführungen des bekannten Isolierpaneels sind jeweils zwei faserverstärkte Strukturpolymerharzschichten vorgesehen, zwischen denen die Barriereschicht angeordnet ist. Die Strukturpolymerharzschichten und die Barriereschicht sind dabei stoffschlüssig zu einem festen Laminat miteinander verbunden.

Die im Gebrauch der freien Umgebung zugeordnete andere Decklage des bekannten Isolierpaneels ist dagegen bei seinen für die Praxis vorgesehenen Ausführungen einlagig aus einem gasundurchlässigen dickeren Metallblech hergestellt, wie beispielsweise einem dickeren Aluminium- oder Stahlblech.

Zwischen den Decklagen ist bei dem bekannten Isolierpaneel wie üblich eine isolierende Kernschicht angeordnet, die aus einem geschäumten Kunststoff besteht.

Ein grundsätzliches Problem bei mehrlagig aus unterschiedlichen Werkstoffen aufgebauten Isolierpaneelen besteht darin, eine dauerhaft feste Verbindung zwischen den einzelnen Lagen zu gewährleisten. So lassen sich viele Werkstoffe, die zwar optimale Eigenschaften im Hinblick auf die ihnen zugedachte Funktion aufweisen, jeweils nur schlecht stoffschlüssig miteinander verbinden. Dies gilt insbesondere dann, wenn unterschiedliche Kunststoffe miteinander verbunden werden sollen.

Bei dem voranstehend beschriebenen bekannten Isolierpaneel soll dieses Problem dadurch beseitigt sein, dass bei der als Laminatdeckplatte ausgebildeten Decklage die Fasern der der Kernlage zugeordneten faserverstärkten Strukturpolymerharzschicht eine Bindungsoberfläche für den Schaum der Kernlage bereitstellen. Indem nach dem Anschäumen der Kernlage die Fasern der Strukturpolymerharzschicht in die Kernlage greifen, soll eine intensive formschlüssige Anbindung erreicht werden, die trotz ihrer schlechten Verklebbarkeit eine dauerhafte Verbindung zwischen dem Schaum der isolierenden Kernlage und der zugeordneten Strukturpolymerharzschicht der Decklage gewährleisten soll.

Abgesehen von dem Problem der sicheren Anbindung der Kernlage an die Decklagen ist die Herstellung von Isolierpaneelen der voranstehend erläuterten Art aufwändig. Dies gilt insbesondere dann, wenn bei dem bekannten Isolierpaneel die als Laminatverbund ausgebildete Decklage so ausgerüstet sein soll, dass sie ausreichend beulsteif und stoßbeständig ist, um den im rauen Arbeitseinsatz auftretenden Belastungen sicher standzuhalten.

Vor dem Hintergrund des voranstehend erläuterten Standes der Technik bestand die Aufgabe der Erfindung darin, ein Isolierpaneel zu schaffen, das sich kostengünstig herstellen lässt und dabei eine optimale Kombination aus minimiertem Gewicht, hoher Festigkeit und Formsteifigkeit sowie hoher Isolierwirkung bietet.

Ebenso sollte ein Nutzfahrzeug angegeben werden, bei dem neben einer optimalen thermischen Abschirmung des im Laderaum seines Aufbaus zu verstauenden temperaturempfindlichen Guts eine optimierte Unempfindlichkeit des Aufbaus gegen die insbesondere beim Be- und Entladen auftretenden Belastungen gewährleistet ist.

In Bezug auf das Isolierpaneel hat die Erfindung diese Aufgabe dadurch gelöst, dass ein solches Isolierpaneel die in Anspruch 1 angegebenen Merkmale besitzt.

In Bezug auf ein Nutzfahrzeug, das zum Transport von temperaturempfindlichen Gütern bestimmt ist und dabei ein Chassis, an dem die Räder des Nutzfahrzeugs gelagert sind, und einen vom Chassis getragenen Nutzfahrzeugaufbau, der mit seinen Seitenwänden, seinem Boden und seinem Dach einen Laderaum umschließt, in dem zum Transport die jeweils zu transportierenden Güter verstaut sind, umfasst, ist die voranstehend angegebene Aufgabe dagegen dadurch gelöst worden, dass mindestens eine der Seitenwände oder das Dach des Nutzfahrzeugaufbaus aus mindestens einem erfindungsgemäß ausgebildeten Isolierpaneel gebildet ist. Besonders eignet sich die Erfindung dabei für Nutzfahrzeuge, die mit einer Temperiereinrichtung ausgestattet sind, die aktiv die Temperatur der im Laderaum des Nutzfahrzeugaufbaus vorhandenen Atmosphäre in einem bestimmten Bereich hält.

Weitere vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Isolierpaneel zur Verwendung für einen Nutzfahrzeugaufbau weist demgemäß in Übereinstimmung mit dem eingangs erläuterten Stand der Technik
- eine der Umgebung des jeweiligen Fahrzeugaufbaus zugeordnete äußere Decklage,
- eine innere Decklage, die einem von dem Fahrzeugaufbau umgrenzten Laderaum zugeordnet ist, wobei die innere und die äußere Decklage jeweils aus mehr als zwei aufeinander liegenden Schichten bestehen,
   sowie
- eine zwischen den Decklagen angeordneten Kernlage aus einem thermisch isolierenden Material
auf.

Erfindungsgemäß ist nun mindestens eine der Decklagen als mindestens dreischichtiges Sandwich aufgebaut, das
- eine der jeweiligen Außenseite des Isolierpaneels zugeordnete Außenschicht aus einem Leichtmetallwerkstoff,
- eine der Kernlage zugeordnete Innenschicht aus einem Leichtmetallwerkstoff
   und
- eine stoffschlüssig mit der Außenschicht und der Innenschicht verbundene Kernschicht umfasst, die aus einem Kernschichtwerkstoff besteht, der eine höhere Festigkeit aufweist als der Leichtmetallwerkstoff der Außen- und Innenschicht.

Anders als beim eingangs erläuterten Stand der Technik gewinnt ein erfindungsgemäßes Isolierpaneel dadurch optimierte Gebrauchseigenschaften, dass mindestens eine seiner Decklagen als Verbund aus einer Kernschicht, die die jeweils geforderte Formsteifigkeit und Festigkeit gewährleistet und zwei Deckschichten gebildet ist, die jeweils aus Leichtmetallwerkstoff bestehen und von denen eine Innenschicht, die der Kernlage des Isolierpaneels zugeordnet ist, und die andere eine Außenschicht ist, die der freien Umgebung des Isolierpaneels zugeordnet ist.

Die innere und äußere Deckschicht der erfindungsgemäß als Sandwich ausgebildeten Decklage bilden einerseits jeweils eine Sperrschicht gegen das Eindringen von Feuchtigkeit, Dämpfen oder anderen Medien in die mit der Sandwich-Decklage verbundene Kernlage, die die aus thermisch isolierendem Material bestehende Kernlage schädigen könnten.

Andererseits bildet die der Kernlage zugewandte innere Deckschicht der als Sandwich aufgebauten Decklage einen optimalen Untergrund für die Anbindung an den Kernschichtwerkstoff der Kernlage des Isolierpaneels.

Die der jeweiligen Außenseite des Isolierpaneels zugeordnete äußere Deckschicht der als Sandwich ausgebildeten Decklage bietet dagegen schon ohne jede weitere Maßnahme einen ebenen und damit einhergehend guten optischen Eindruck. Dies erlaubt es, die der jeweiligen Außenseite zugewandte Deckschicht entweder unbeschichtet zu belassen oder ohne aufwändige zusätzliche Maßnahmen mit einer Lackierung, Folierung oder desgleichen zu beschichten.

Die Kernschicht der erfindungsgemäß als Sandwich aufgebauten Decklage kann dagegen dahingehend optimiert werden, dass die Decklage eine so hohe Formsteifigkeit und ein so ausreichendes Stoßaufnahmevermögen besitzt, dass das erfindungsgemäße Isolierpaneel den im rauen Einsatz auftretenden statischen und dynamischen Belastungen sicher standhält. Insbesondere erweist sich ein erfindungsgemäß aufgebautes Isolierpaneel als unempfindlich gegen Stöße, die gegen die jeweils als Sandwich ausgebildeten Decklagen gerichtet sind und dadurch entstehen, dass beispielsweise das Transportgut oder ein Stapelfahrzeug beim Be- und Entladen eines von einem erfindungsgemäßen Isolierpaneel umgrenzten Laderaum gegen die betreffende Decklage trifft.

Die Anbindung der aus Leichtmetallwerkstoff bestehenden Innen- und Außenschichten an die Kernschicht des mindestens einen Sandwich-Decklage eines erfindungsgemäßen Isolierpaneels kann in an sich bekannter Weise durch eine entsprechende Konditionierung entweder der zugeordneten Oberflächen der Kernschicht oder der Innen- bzw. Außenschicht erfolgen. Hierzu können Haftvermittlerschichten auf die Kernschicht oder die jeweilige innere oder äußere Deckschicht aufgetragen werden, um die Haftung der Innen- und Außenschicht an der Kernschicht der Sandwich-Decklage zu gewährleisten.

Die Anbindung der erfindungsgemäß mindestens einen als Sandwich ausgebildeten Decklage an die Kernlage des erfindungsgemäßen Isolierpaneels kann in vergleichbarer Weise dadurch erfolgen, dass die der Kernlage zugeordnete Fläche der Innenschicht der Sandwich-Decklage eines erfindungsgemäßen Isolierpaneels so konditioniert wird, dass eine einwandfreie stoffschlüssige Anbindung an das Isoliermaterial gewährleistet ist, aus dem die Kernlage besteht. Auch hierzu können bekannte physikalische oder chemische Verfahren eingesetzt werden, um eine für die stoffschlüssige Verbindung günstige Oberflächenaktivierung der Leichtmetallschicht zu bewirken. Alternativ kann die Innenschicht auch mit einer für die stoffschlüssige Anbindung einer geeigneten Beschichtung versehen werden.

Dementsprechend kann zum Anbinden der Decklage an die Kernlage eine Zwischenlage vorgesehen sein, die auf einer Seite an die aus isolierendem Material bestehende Kernlage und auf der gegenüberliegenden Seite an die metallische Innenschicht der Sandwich-Decklage angrenzt, wobei die an die Kernlage grenzende Seite der Zwischenlage affin zum angrenzenden Werkstoff der Kernlage und die an die Innenschicht der Sandwich-Decklage grenzende Seite der Zwischenschicht affin zum Metallwerkstoff der Außenschicht der Sandwich-Decklage ist.

Denkbar ist es hier, dass die Innenschicht der erfindungsgemäß vorgesehenen Sandwich-Decklage die Funktion einer solchen haftvermittelnden Zwischenschicht übernimmt. In diesem Fall ist die aus Leichtmetallwerkstoff bestehende Innenschicht auf der Seite, mit der sie an die aus isolierendem Material bestehende Kernlage grenzt, affin zum Werkstoff der Kernlage, während sie auf ihrer an die Kernschicht der Sandwich-Decklage grenzenden Seite affin zum Kernschichtwerkstoff der Kernschicht der Sandwich-Decklage ist.

Eine solche über eine Zwischenschicht oder ihre Innenschicht erfolgende Anbindung einer als Sandwich im Sinne der vorliegenden Erfindung ausgebildeten Decklage an die Kernlage eines erfindungsgemäßen Isolierpaneels ist in der Europäischen Patentanmeldung 13 195 689.8 vom 4. Dezember 2013 im Einzelnen erläutert, deren Inhalt in die vorliegende Anmeldung vollständig einbezogen wird und deren Priorität die vorliegende Anmeldung in Anspruch nimmt.

In der hier einbezogenen Europäischen Anmeldung 13 195 689.8 ist im Einzelnen ein Isolierpaneel beschrieben, bei dem als Sandwich aufgebaute Decklagen mittels einer Haftvermittlerschicht an die Kernlage des Isolierpaneels angebunden sind. Bei diesem in der hier einbezogenen Europäischen Patentanmeldung 13 195 689.8 beschriebenen Isolierpaneel ist die aus thermisch isolierendem Werkstoff bestehende Kernlage zwischen zwei "Außenhäuten" angeordnet. Diese "Außenhäute" umfassen jeweils eine als Sandwich aufgebaute Decklage im Sinne der vorliegenden Erfindung, die durch eine aus einem ein- oder mehrlagigen, insbesondere faserverstärkten Kunststoff gebildete "Strukturlage" (= Kernschicht der erfindungsgemäßen Sandwich-Decklage), eine zwischen der Kernlage und der "Strukturlage" angeordnete aus Leichtmetall, insbesondere aus Aluminium, bestehende Zwischenschicht (= Innenschicht der erfindungsgemäßen Sandwich-Decklage) und eine auf der von der Kernlage abgewandten Seite auf die "Strukturlage" aufgebrachten "Decklage" (= Außenschicht der erfindungsgemäßen Sandwich-Decklage) gebildet ist, welche ebenfalls aus einem Leichtmetallwerkstoff, insbesondere Aluminium, besteht. Zusätzlich kann die "Decklage" auf ihrer von der "Strukturlage" abgewandten Seite mit einer "Lackschicht" (= Zusatzschicht der erfindungsgemäßen Sandwich-Decklage) belegt sein.

Die bei einem erfindungsgemäßen Isolierpaneel vorgesehene Anbindung der Kernlage an die aus Leichtmetall bestehende Innenschicht der jeweiligen als Sandwich ausgebildete Decklage erlaubt eine sichere, insbesondere ausschließlich stoffschlüssige Verbindung ohne die Notwendigkeit, eine zusätzliche formschlüssige Anbindung durch zusätzlich vorgesehene, in die Kernlage hineinreichende und von der Decklage getragene Fasern oder desgleichen.

Bei einem erfindungsgemäßen Isolierpaneel kann die Innenschicht eben ausgebildet sein. Optimaler Weise sind dabei die Innen- und Außenschicht gleichermaßen glatt und frei von Vorsprüngen ausgebildet. Die metallischen Innen- und Außenschichten können so als dünne Folien auf die Kernschicht der Sandwich-Decklage aufgebracht werden. Da dabei keine Rücksicht auf die besondere Ausgestaltung der Innen- oder Außenschicht genommen muss, erlaubt dies eine besonders einfache Vorfertigung der Sandwich-Decklagen.

Selbstverständlich schließt die jeweilige Außenfläche der Innen- und Außenschicht der Sandwich-Decklage nicht aus, dass die betreffende Außenfläche mikroskopisch oder makroskopisch betrachtet Formelemente aufweist, an denen es ergänzend zu der stoffschlüssigen Anbindung zu einer formschlüssigen Verklammerung des Kernlagenwerkstoffs mit dem Leichtmetallwerkstoff der Innenschicht der Sandwich-Decklage kommt. Eine entsprechend aktivierte Oberflächenstruktur kann beispielsweise in an sich bekannter Weise durch eine Behandlung mit einem Energiestrahl, z. B. durch Plasma- oder Laserstrahlbehandlung, oder durch eine chemische Oberflächenbehandlung, z. B. durch eine Beizbehandlung, hergestellt werden. Sinnvoll kann eine entsprechende Oberflächenaktivierung beispielsweise an der der Kernlage des Isolierpaneels zugeordneten Oberfläche der Innenschicht sein. Ebenso kann es vorteilhaft sein, die der freien Außenseite des Isolierpaneels zugeordnete Oberfläche der Außenschicht zu aktivieren, wenn beispielsweise eine Lackierung oder desgleichen als Zusatzschicht auf die Außenseite des Isolierpaneels aufgebracht werden soll.

Alternativ oder ergänzend zu einer Oberflächenaktivierung der mit der Innen- und der Außenschicht zu belegenden Seitenflächen der Kernschicht kann für die stoffschlüssige Anbindung der Außenschicht oder der Innenschicht an die Kernschicht bei mindestens einer der als Sandwich ausgebildeten Decklagen zwischen der Außenschicht und der Kernschicht oder der Innenschicht und der Kernschicht eine Haftvermittlerschicht vorgesehen sein.

Die Innen- und die Außenschicht der erfindungsgemäß als Sandwich ausgebildeten Decklage kann aus jedem Leichtmetallwerkstoff bestehen, der eine ausreichende Beständigkeit gegen Umwelteinflüsse hat und als Gas- oder Dampfsperre wirken kann. Hierzu sind Materialien erforderlich, die die Diffusion von Gasen, wie Sauerstoff, Kohlendioxid oder Stickstoff, und/oder Dämpfen, wie Wasserdampf oder Penthangas, auf ein Minimum begrenzen. Optimalerweise tritt die Sperrwirkung dabei sowohl in eine in das Isolierpaneel gerichtete Richtung als auch aus einer aus dem Paneel hinaus gerichteten Richtung ein.

Bei Sperrschicht der hier in Rede stehenden Art spricht man auch von "Barriereschichten", da eine absolute Gasdichtigkeit und/oder Dampfdichtigkeit in der Praxis kaum erreicht werden kann. Der Weg von Gas aus dem Paneel hinaus sollte dabei versperrt sein, weil in der Kernlage gezielt Gase, wie Penthangas, enthalten sein können, die die thermische Isolationswirkung der Kernlage unterstützen. Das Gas sollte daher zur Aufrechterhaltung einer hohen thermischen Isolationswirkung nicht aus der Kernlage entweichen können. Der Weg von der Umgebung in das Isolierpaneel sollte gleichzeitig versperrt sein, um insbesondere das Eindringen von Feuchtigkeit in den Schaum der Kernlage zu verhindern.

Indem bei einem erfindungsgemäßen Isolierpaneel die als Sandwich aufgebaute Decklage zwei Schichten, nämlich die aus Leichtmetallwerkstoff bestehende Innen- und die Außenschicht, den Durchtritt von Dampf oder anderen Gasen sowie Flüssigkeiten versperren, ist eine optimierte Sicherheit gegen eine Beschädigung und einen Funktionsverlust der Kernlage des Isolierpaneels gewährleistet.

Für die diese Sperrwirkung aufweisenden Innen- und Außenschichten der Sandwich-Decklage eines erfindungsgemäßen Isolierpaneels eignen sich insbesondere aus Aluminium oder dessen Legierungen bestehende Werkstoffe. In Frage kommen aber gegebenenfalls auch Mg oder dessen Legierungen.

Der jeweilige Leichtmetallwerkstoff der Innen- oder Außenschicht der Sandwich-Decklage lässt sich in der Regel zu dünnen Folien auswalzen, die auf einfache Weise auf die Kernschicht der Sandwich-Decklage appliziert werden können. Besonders geeignet hierfür sind aus Al-Legierungen bestehende Folien, die sich großtechnisch auf einfache Weise sehr dünn herstellen lassen. Alternativ zu einer Folienapplikation ist es jedoch auch denkbar, die Leichtmetallschichten der Sandwich-Decklage durch Aufspritzen oder durch Auftrag eines Leichtmetallpartikel enthaltenden Trägermaterials auf die Kernschicht aufzutragen.

Typische Dicken der Innen- oder Außenschicht der als Sandwich aufgebauten Decklage liegen bei 30 - 400 µm, wobei die Außenschicht typischerweise 100 - 400 µm, insbesondere 200 - 300 µm, und die Innenschicht insbesondere 30 - 150 µm dick sind.

Der Kernschichtwerkstoff einer erfindungsgemäßen Sandwich-Decklage muss eine ausreichende Festigkeit und Steifigkeit insbesondere bei stoßender Belastung aufweisen. Diese Eigenschaftskombination kann durch Verwendung eines faser- oder gewebeverstärkten Kunststoffs für die Kernschicht erreicht werden. Insbesondere eignen sich für diesen Zweck faserverstärkte Polymerwerkstoffe, insbesondere Thermoplast-, Polypropylen- oder Polyesterwerkstoffe.

Die Fasern können in an sich bekannter Weise in unregelmäßiger Ausrichtung als lose Schüttung oder als Vlies in den Kunststoff des Kernschichtwerkstoffs eingebracht sein. Der Vorteil von Einzelfasern, die mehr oder weniger ungeordnet im Kernschichtwerkstoff eingebettet sind, besteht darin, dass die so verstärkte Kernschicht keine ausgeprägte Vorzugsrichtung besitzt, in der eine besonders hohe oder niedrige Festigkeit vorliegt.

Um die erforderliche Formsteifigkeit und Stoßfestigkeit zu gewährleisten, kann es zweckmäßig sein, wenn die Kernschicht der als Sandwich ausgebildeten Decklage aus zwei oder mehr jeweils durch Fasern verstärkte Kunststoffschichten gebildet ist. Dabei können die Fasern der einzelnen Kunststoffschichten jeweils in eine Vorzugsrichtung ausgerichtet sein, wobei auch hier zur Gewährleistung eines optimalen Stoßverhaltens die Vorzugsrichtung der Fasern der einen Kunststoffschicht von der Vorzugsrichtung der Fasern der anderen Kunststoffschicht abweicht. Bei der Verwendung von zwei oder mehr faserverstärkten Kunststoffschichten für die Kernschicht lässt sich eine optimierte Festigkeit und Widerstandsfähigkeit gegen Stoßbelastungen erreichen. Um eine optimale Formtreue der Kernschicht zu gewährleisten, bietet es sich dabei an, wenn wenigstens drei faserverstärkte Kunststoffschichten so vorgesehen sind, dass die Vorzugsrichtungen der Fasern von wenigstens zwei Schichten parallel zueinander und im Wesentlichen senkrecht zur Vorzugsrichtung der Fasern wenigstens einer weiteren faserverstärkten Kunststoffschicht verlaufen. Erreicht werden kann eine solche Ausrichtung der Fasern auch dadurch, dass die Verstärkungsfasern als Gewebe in die Kernschicht der Decklage eingebracht sind.

Insbesondere in Fällen, in denen in ein erfindungsgemäßes Isolierpaneel ein bestimmtes Funktionselement einbezogen werden soll, kann es alternativ oder ergänzend zu einer Fertigung der Kernschicht aus Kunststoff zweckmäßig sein, wenn es sich bei dem Kernschichtwerkstoff im Bereich des betreffenden Funktionselements um ein Blechmaterial, insbesondere ein Stahlblechmaterial handelt. Auf diese Weise lässt sich eine einfache Befestigung und Einbindung des Funktionselements in das Isolierpaneel ermöglichen.

Wie bei der oben bereits erwähnten einlagig ausgebildeten Deckschicht lassen sich in Blechmaterial, das entweder alleine als Decklage oder als Kernschicht der in erfindungsgemäßer Weise als Sandwich aufgebauten Decklage eingesetzt wird, durch ein geeignetes Formverfahren ohne Weiteres Schienen, Aufnahmen, Vertiefungen und vergleichbare Formelemente einformen, die beispielsweise zum Befestigen des Transportguts benötigt werden. Hierbei kann es sich beispielsweise um Verzurrschienen oder desgleichen handeln. Selbstverständlich ist es dabei denkbar, das Blechmaterial mit einem faserverstärkten Kunststoff zu kombinieren, um die Formstabilität der Zwischenschicht über die durch das Blechmaterial bereitgestellte Formsteifigkeit hinaus zu steigern. Das Blechmaterial kann beispielsweise im Durchlauf mit einer Schutzschicht oder einem Haftvermittler beschichtet werden, um eine einfache stoffschlüssige Anbindung der optional zusätzlichen Kunststoffschicht oder der Innen- und Außenschicht der Sandwich-Decklage zu ermöglichen. Ebenso versteht es sich, dass auch das Blechmaterial in geeigneter Weise durch physikalische oder chemische Behandlung oberflächenaktiviert werden kann, um die Anbindung der unterschiedlichen Werkstoffe der Schichten der Sandwich-Decklage zu erleichtern.

Grundsätzlich können bei einem erfindungsgemäßen Isolierpaneel beide Decklagen nach Art eines Sandwichs ausgebildet sein. Dies kann zweckmäßig sein, wenn davon ausgegangen werden kann, dass Belastungen, die im praktischen Einsatz auf die Decklagen des Isolierpaneels wirken, etwa gleich groß oder gleichartig sind. In vielen Verwendungsfällen wird jedoch die auf die Decklage, die dem Laderaum des Nutzfahrzeugaufbaus, für den das jeweilige Paneel verwendet worden ist, zugeordnet ist, von der Belastung abweichen, die auf die der freien Umgebung des Aufbaus zugeordnete Decklage wirkt. Bei einer solchen Belastungserwartung ist es zweckmäßig, wenn eine Decklage des Isolierpaneels in erfindungsgemäßer Weise entsprechend den voranstehenden Erläuterungen als Sandwich und die andere Decklage als eine ebenfalls stoffschlüssig mit der Kernlage verbundene einlagige Deckschicht ausgebildet ist, die aus einem formsteifen Werkstoff besteht. Auch diese Decklage kann dabei aus einem faser- oder gewebeverstärkten Polymerwerkstoff, insbesondere einem Thermoplastwerkstoff, einem Polypropylenwerkstoff oder einem Polyesterwerkstoff, oder einem Metallblechmaterial, insbesondere einem Stahlblechmaterial, hergestellt sein. Eine solche einlagige Ausbildung der einen Decklage kann vorteilhaft sein, wenn in die betreffende Decklage ein Formelement, wie eine Schiene oder desgleichen, eingeformt sein soll, das zum Befestigen oder Verzurren des jeweiligen Transportguts benötigt wird.

Unabhängig davon, wie die Decklagen ausgebildet sind, können sie jeweils auf ihrer der freien Umgebung zugeordneten Außenseite mit einer oder mehreren Zusatzschichten belegt sein. Bei diesen Zusatzschichten kann es sich jeweils um eine Lack- oder Folienschicht handeln, wobei die Zusatzschicht selbstverständlich auch durch ein mehrlagig aufgetragenes Lacksystem oder eine ein oder mehrfach beschichtete Folie gebildet sein kann.

Ein erfindungsgemäßes Isolierpaneel umfasst dementsprechend mindestens eine als Außenhaut dienende Decklage, deren die Funktion einer Strukturlage übernehmende Kernschicht aus einem Kernschichtwerkstoff besteht, bei dem es sich beispielsweise um einen in einer oder mehreren Lagen ausgebrachten, insbesondere glasfaserverstärkten Kunststoff handeln kann, und die an der Seite, die der aus einem wärmeisolierenden Schaum bestehenden Kernlage des Paneels zugeordnet ist, mit einer beispielsweise aus einer Leichtmetallfolie bestehenden inneren Deckschicht belegt ist, die eine Zwischenlage zwischen der Kernschicht der Decklage und der Kernlage des Isolierpaneels bildet, wobei die Kernschicht der als Sandwich aufgebauten Decklage des erfindungsgemäßen Isolierpaneels gleichzeitig auf ihrer der jeweiligen Außenseite des Paneels zugeordneten Seite mit einer weiteren Leichtmetallschicht belegt ist, die die äußere Deckschicht der Decklage bildet. Auf die Außenschicht der Sandwich-Decklage kann dabei wiederum eine Zusatzschicht beispielsweise in Form einer Lack- oder Folienschicht aufgetragen sein.

Nachfolgend wird die Erfindung anhand einer Ausführungsbeispiele darstellenden Zeichnung näher erläutert. Es zeigen jeweils schematisch und nicht maßstäblich:
- Fig. 1: ein Nutzfahrzeug in einer perspektivischen Ansicht von hinten;
- Fig. 2: ein Isolierpaneel in einer perspektivischen Ansicht;
- Fig. 3: das Isolierpaneel gemäß Fig. 2 in einer vergrößerten Ansicht eines Ausschnitts einer seiner Längsseiten;
- Fig. 4: eine zweite Ausgestaltung eines Isolierpaneels in einer der Fig. 3 entsprechenden Ansicht;
- Fig. 5: eine dritte Ausgestaltung eines Isolierpaneels in einer der Fig. 3 entsprechenden Ansicht.

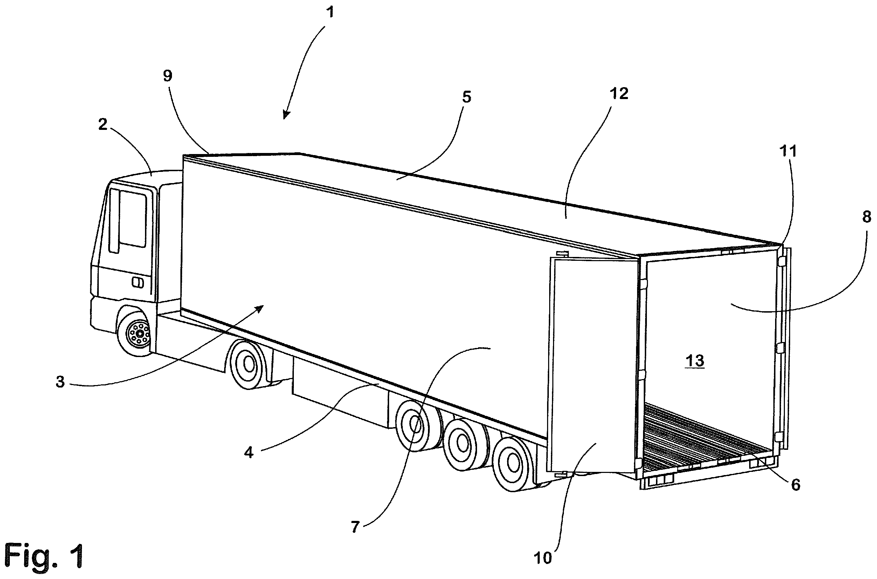

Bei dem in Fig. 1 gezeigten Nutzfahrzeug 1 handelt es sich um einen Sattelzug, der eine Zugmaschine 2 und einen von der Zugmaschine 2 gezogenen Sattelauflieger 3 umfasst, in der Fachsprache auch "Trailer" genannt. Der für den Transport von temperaturempfindlicher Ware ausgelegte Sattelauflieger 3 trägt auf einem Chassis 4 einen quaderförmigen Kofferaufbau 5, der durch einen Boden 6, Längsseitenwände 7,8, eine der Zugmaschine 2 zugeordnete Stirnwand 9, eine mit einer doppelflügeligen Türe 10 versehene Rückwand 11 und ein Dach 12 gebildet ist. An der Außenseite der Stirnwand 9 ist in bekannter Weise eine hier nicht sichtbare Transportkühlmaschine befestigt. Die Transportkühlmaschine temperiert als Temperiereinrichtung die Atmosphäre, die im vom Kofferaufbau 5 umgrenzten Laderaum 13 des Kofferaufbaus 5 enthalten ist, auf eine vorbestimmte Temperatur.

Beim hier gezeigten Ausführungsbeispiel des Nutzfahrzeugs 1 sind die Längsseitenwände 7,8 und das Dach 12 des Kofferaufbaus 5 des Sattelaufliegers 3 jeweils durch jeweils ein Isolierpaneel gebildet. Die Isolierpaneele erstrecken sich dabei jeweils über die gesamte von der jeweiligen Längsseitenwand 7,8 und dem Dach eingenommene Fläche. Auf diese Weise wird eine optimale Isolierwirkung bei gleichzeitig minimiertem Montageaufwand erzielt. Alternativ ist es selbstverständlich auch denkbar, die Längsseitenwände 7,8 oder das Dach 12 aus mehreren aneinander gesetzten und in geeigneter Weise miteinander verbundenen Isolierpaneelen zusammenzusetzen, die sich beispielsweise jeweils über die Höhe der Längsseiten 7,8 bzw. der Breite des Dachs 12 erstrecken.

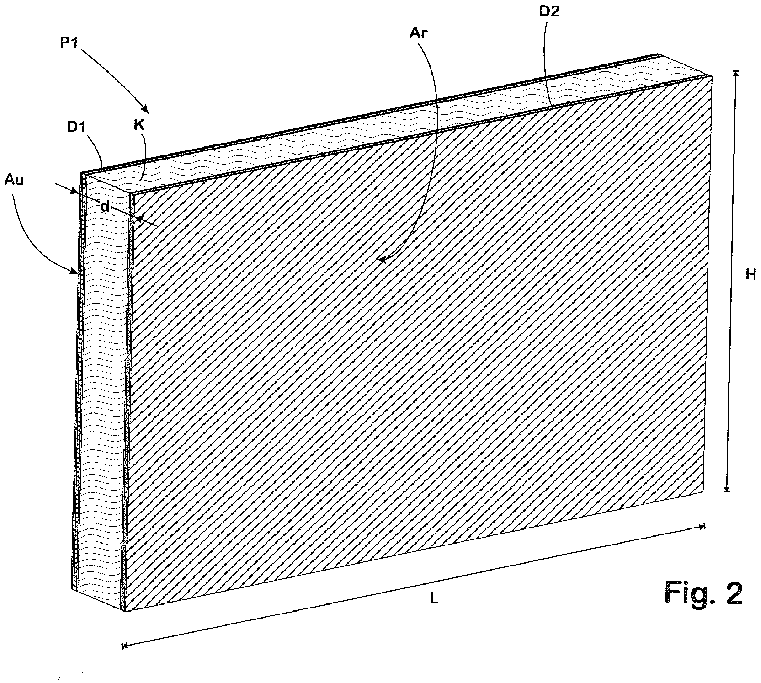

In den Figuren 2 bis 5 sind unterschiedliche Ausgestaltungen von für die Herstellung der Längsseitenwände 7,8 und des Dachs 12 geeigneten Isolierpaneelen P1,P2,P3 gezeigt.

Die Isolierpaneele P1,P2,P3 weisen, wie in Fig. 1 anhand des Isolierpaneels P1 beispielhaft gezeigt, jeweils die Grundform einer Platte auf, deren Höhe H und Länge L jeweils beträchtlich größer sind als ihre Dicke d.

Jedes der Isolierpaneele P1,P2,P3 ist als Sandwichkonstruktion mit einer Kernlage K ausgebildet, die zwischen zwei Decklagen D1,D2 (Isolierpaneel P1), D1',D2' (Isolierpaneel P2) und D1",D2" (Isolierpaneel P3) angeordnet ist.

Die Kernlage K der Isolierpaneele P1,P2,P3 besteht jeweils aus einem geschäumten, geschlossenporigen Kunststoff, bei dem es sich beispielsweise um geschäumtes Polyurethan handeln kann.

Die Dicke dK der Kernlage K beträgt bei erfindungsgemäßen Isolierpaneelen allgemein typischerweise das 15- bis 400-fache, insbesondere 20- bis 360-fache, der Dicke dD der Decklagen D1,D2. Beispielsweise beträgt die Dicke dK in der Praxis 12 - 200 mm bei einer Dicke dD der Decklagen D1,D2 von 0,4 - 5 mm, insbesondere 1 - 2 mm.

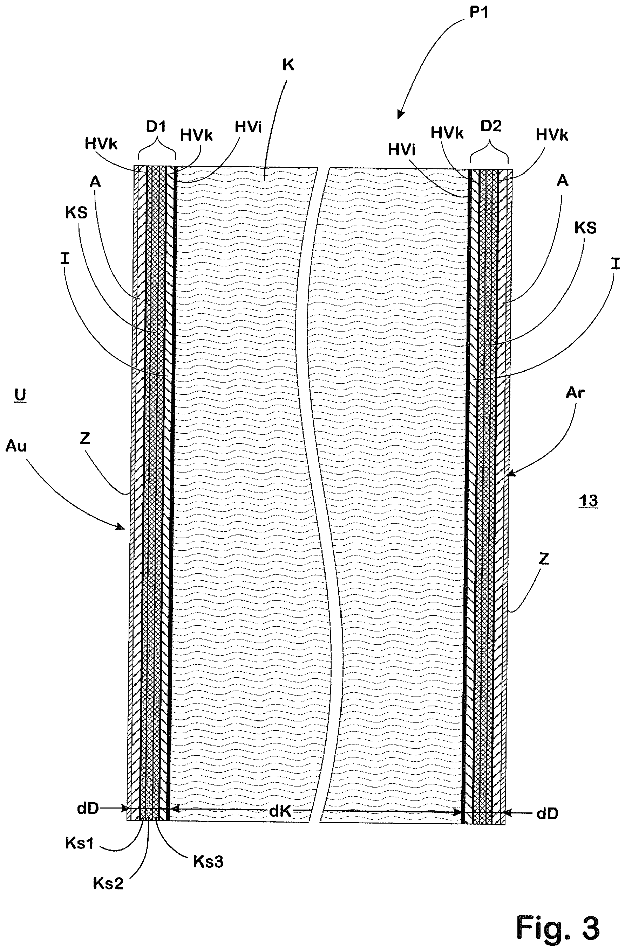

Beim in Fig. 2 und 3 dargestellten Isolierpaneel P1 sind die Decklagen D1,D2 identisch als Sandwich ausgebildet. Sie weisen jeweils eine formstabile Kernschicht KS auf, die an ihrer der Kernlage K zugeordneten Seite mit einer Innenschicht I und an ihrer der jeweiligen freien Außenseite Au,Ar des Isolierpaneels P1 zugeordneten Seite mit einer Außenschicht A belegt ist.

Die Kernschicht KS selber ist wiederum mehrschichtig aufgebaut und ist aus drei Schichten KS1,KS2,KS3 aus faserverstärktem Kunststoff zusammengesetzt. Jede dieser faserverstärkten Kunststoffschichten KS1,KS2,KS3 ist etwa 100 µm bis 500 µm, insbesondere 200 µm bis 400 µm, dick. Die Fasern der faserverstärkten Kunststoffschichten KS1,KS2,KS3 der Kernschicht KS sind dabei jeweils in einer Vorzugsrichtung ausgerichtet. Die Fasern können dabei in Form eines Geleges vorgesehen sein, das in den Kunststoff der jeweiligen Schicht KS1,KS2,KS3 eingebettet ist und in dem die Fasern jeweils mit einer bestimmten parallel zur Ebene, in der die jeweilige Schicht KS1,KS2,KS3 liegt, liegenden Vorzugsrichtung ausgerichtet sind. Die Vorzugsrichtungen der Fasern der äußeren beiden faserverstärkten Kunststoffschichten KS1,KS3 sind dabei gleich, während die Vorzugsrichtung der Fasern der zwischen den äußeren beiden Kunststoffschichten KS1,KS3 der Kernschicht KS liegenden mittleren Kunststoffschicht KS2 im rechten Winkel dazu ausgerichtet ist. Auf diese Weise wird trotz der großen Abmaße des Isolierpaneels P1 eine optimale Formhaltigkeit, insbesondere Ebenheit, bei gleichzeitig maximiertem Stoßaufnahmevermögen der Decklagen D1,D2 erreicht.

Bei den zur Verstärkung der Kernschicht KS verwendeten Fasern handelt es sich hier um Glasfasern. Es könnten jedoch alternativ auch andere Fasern, beispielsweise Kunststofffasern, Basaltfasern, Kohlenstofffasern oder Graphitfasern verwendet werden. Als der die Matrix der faserverstärkten Kunststoffschichten der Kernschicht KS bildende Kunststoff ist bei den Decklagen D1,D2 Polypropylen zum Einsatz gekommen. Es können jedoch nahezu alle thermoplastischen Kunststoffe, Polyester-Werkstoffe oder sonstige Polymere, wie Polyamid und desgleichen, verwendet werden.

Die Innenschicht I und die Außenschicht A bestehen jeweils aus einer zwischen 30 µm und 150 µm, insbesondere zwischen 50 µm und 100 µm, dicken Folie, die aus einem Aluminiumwerkstoff hergestellt ist. An ihrer der Kernschicht KS zugeordneten Seite tragen die Innenschicht I und die Außenschicht A jeweils eine zum Kunststoff der Kernschicht KS affine, als Lackbeschichtung aufgetragene Haftvermittlerschicht HVk, über die die Innenschicht I und die Außenschicht A jeweils stoffschlüssig an die ihnen zugeordnete Seite der Kernschicht KS angebunden sind.

Die Innenschichten I der Decklagen D1,D2 weisen in gleicher Weise eine zum thermisch isolierenden Schaum der Kernlage K affine Haftvermittlerbeschichtung HVi auf, über die die stoffschlüssige Anbindung der Decklagen D1,D2 an die Kernlage K erfolgt. Die Innenschichten I bilden so eine Zwischenschicht, über die die hier ausschließlich stoffschlüssige Verbindung zwischen der strukturgebenden, eine hohe Formsteifigkeit und Stoßunempfindlichkeit gewährleistenden Kernschicht KS der Decklagen D1,D2 und der Kernlage K des Isolierpaneels P1 hergestellt ist.

Die Außenseiten Au,Ar der Außenschichten A der Decklagen D1,D2 des Isolierpaneels P1 sind jeweils eben und glatt ausgebildet.

An ihrer im Gebrauch der freien Umgebung U zugeordneten Außenseite Au ist die Außenschicht A der Decklage D1 mit einer Zusatzschicht Z belegt, bei der es sich beispielsweise um eine Lackierung handelt. Genauso ist die Außenseite Ar der Außenschicht A der dem Laderaum 13 zugeordneten Decklage D2 mit einer ebenfalls als Lackierung ausgebildeten Zusatzschicht Z belegt, um die Außenschicht A der Decklage D2 vor korrosiven Angriffen durch im Laderaum 13 anfallende Flüssigkeiten oder sonstige Medien zu schützen. Um eine dauerhaft sichere Haftung der Zusatzschichten Z auf der jeweiligen Außenseite Ar,Au zu gewährleisten, sind die Außenschichten A an den Außenseiten Ar,Au jeweils vor dem Lackauftrag durch ein geeignetes physikalisches oder chemisches Verfahren in an sich bekannter Weise oberflächenaktiviert worden. Alternativ zu der Lackschicht könnte auch eine Folie oder ein Folienverbund als Zusatzschicht Z vorgesehen sein.

Die durch die Decklagen D1,D2 erzielte Steifigkeit und das Stoßverhalten des Isolierpaneels P1 ist durch den aus den Sandwich-Decklagen D1,D2 und der Kernlage K gebildeten Verbund so gut, dass es auch mit hoher kinetischer Energie auftreffenden Stößen ohne sichtbare Beschädigungen standhält.

Neben der durch sie gewährleisteten hohen Formsteifigkeit und dem durch sie bereitgestellten Stoßaufnahmevermögen bilden Decklagen D1,D2 mit ihrer Innenschicht I und Außenschicht A jeweils eine doppelte Sperre gegen das Durchtreten von Feuchtigkeit oder Gasen sowohl von der Umgebung U oder dem Laderaum 13 in Richtung der Kernlage K als auch in umgekehrter Richtung von der Kernlage K in Richtung der Umgebung U oder dem Laderaum 13. Feuchtigkeit, mit der die im Laderaum 13 enthaltene Atmosphäre beladen ist und die möglicherweise an der Außenseite Ar des Isolierpaneels P1 kondensiert, wird so daran gehindert, in die Kernlage K einzudringen. Umgekehrt wird Gas, mit dem die Poren der Kernlage K zur Verbesserung der thermischen Isolierwirkung gefüllt sind, daran gehindert, über die Decklagen D1,D2 in den Laderaum 13 oder die freie Umgebung zu entweichen.

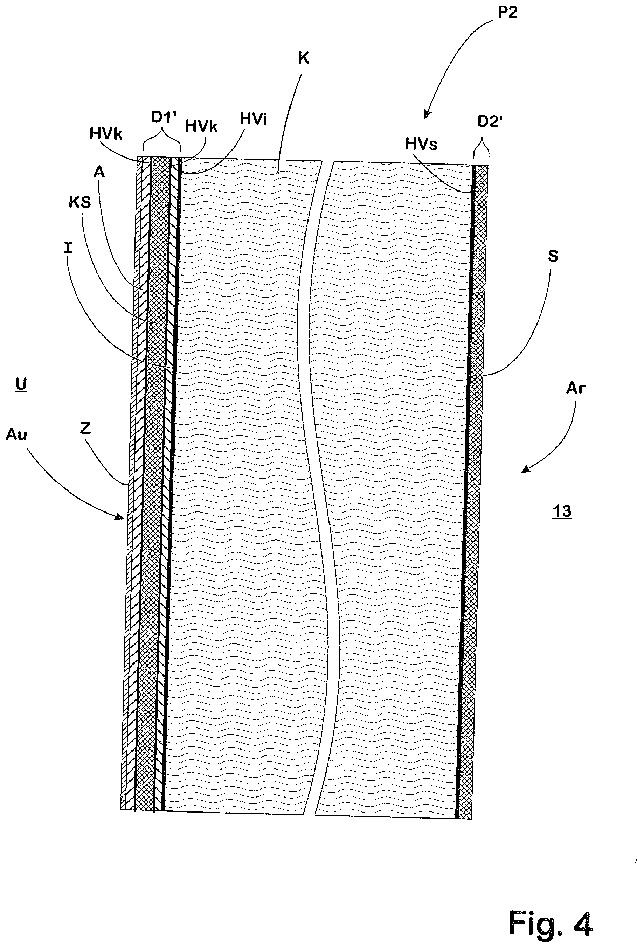

Auch das in Fig. 4 dargestellte Isolierpaneel P2 hat zwei Decklagen D1',D2' und eine zwischen den Decklagen D1',D2' angeordnete Kernlage K, die auch hier aus wärmeisolierendem, geschlossenporigem Polyurethanschaum besteht. Die der Umgebung U zugeordnete Decklage D1' weist denselben Sandwich-Aufbau auf wie die Decklage D1 des Isolierpaneels P1. Die dem Laderaum 13 zugeordnete Decklage D2 besteht in diesem Fall jedoch nur aus einem Stahlblech S, das in einem Durchlaufverfahren (Coilcoating) mit einem Schutzüberzug überzogenen ist. Über eine zwischen der Kernlage K und der Decklage 2 angeordnete Haftvermittlerschicht HVs ist die Stahlblech-Decklage mit dem Schaumstoff der Kernlage K stoffschlüssig verbunden. Auf die Haftvermittlerschicht HVs kann auch verzichtet werden, wenn das Stahlblech S der Decklage D2' an seiner der Kernlage K zugeordneten Oberfläche durch eine geeignete Behandlung, z. B. Plasmastrahlen, so aktiviert wird, dass der Schaumwerkstoff der Kernlage K sich beim Anschäumen an das Stahlblech S stoffschlüssig mit der betreffenden Oberfläche verbindet.

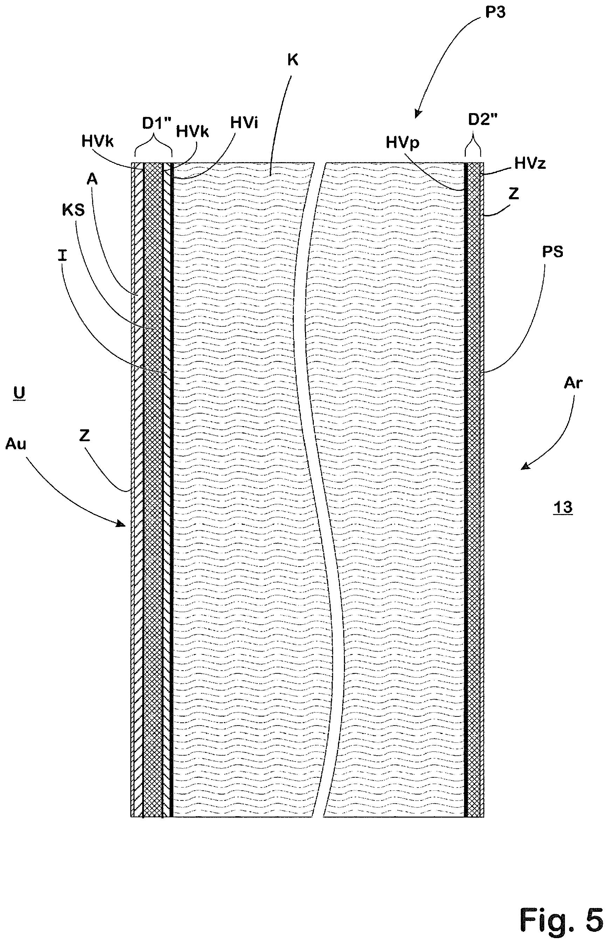

Beim in Fig. 5 dargestellten Isolierpaneel P3 ist die der Umgebung U zugeordnete Decklage D1" wie die Decklagen D1,D2 des Isolierpaneels P1 und die Decklage D1' des Isolierpaneels P2 wiederum als Sandwich mit einer der Kernlage K des Isolierpaneels P3 zugeordneten und mit ihr stoffschlüssig verbundenen Innenschicht I, die aus einer Al-Folie besteht, einer stoffschlüssig mit der Innenschicht I verbindenen Kernschicht KS, die aus mehreren faserverstärkten Kunststoffschichten besteht, und einer der Umgebung U zugeordneten, ebenfalls mit der Kernschicht KS stoffschlüssig verbundenen Außenschicht A gebildet. Die Außenschicht A trägt zudem wie die Außenschichten A der Decklagen D1,D2,D1' an ihrer der Umgebung U zugeordneten Außenseite eine Zusatzschicht Z.

Die Decklage D2" des Isolierpaneels P3 ist dagegen aus einer Polyester-Schicht PS gebildet, die an ihrer dem Laderaum 13 zugeordneten Außenseite Ar mit einer Zusatzschicht Z beschichtet ist. Bei der Zusatzschicht Z handelt es sich um eine Lackierung, die über eine auf die Polyester-Schicht PS aufgetragene Haftvermittlerschicht HVz an die Polyester-Schicht PS angebunden ist. Auf ihrer der Kernlage K zugeordneten Seite ist die Polyester-Schicht PS ebenfalls mit einer Haftvermittlerschicht HVp beschichtet, welche sicherstellt, dass der Schaumstoff der Kernlage K dauerhaft stoffschlüssig an der Polyester-Schicht PS der Decklage D2" haftet.

### BEZUGSZEICHEN

- 1: Nutzfahrzeug
- 2: Zugmaschine
- 3: Sattelauflieger
- 4: Chassis des Sattelaufliegers 3
- 5: Kofferaufbau (Nutzfahrzeugaufbau) des Sattelaufliegers 3
- 6: Boden des Kofferaufbaus 5
- 7,8: Längsseitenwände des Kofferaufbaus 5
- 9: Stirnwand des Kofferaufbaus 5
- 10: doppelflügelige Türe des Kofferaufbaus 5
- 11: Rückwand des Kofferaufbaus 5
- 12: Dach des Kofferaufbaus 5
- 13: Laderaum des Kofferaufbaus 5

- P1,P2,P3: Isolierpaneel
- D1,D2: Decklagen des Isolierpaneels P1
- D1',D2': Decklagen des Isolierpaneels P2
- D1",D2": Decklagen des Isolierpaneels P3
- H: Höhe der Isolierpaneele P1,P2,P3
- L: Länge der Isolierpaneele P1,P2,P3
- d: Dicke der Isolierpaneele P1,P2,P3
- K: Kernlage der Isolierpaneele P1,P2,P3
- dK: Dicke der Kernlage K
- dD: Dicke der Decklagen D1,D2
- KS: Kernschicht
- I: Innenschicht
- Ar: dem Laderaum 13 zugeordnete Außenseite der Isolierpaneele P1-P3
- Au: der Umgebung U zugeordnete Außenseite der Isolierpaneele P1-P3
- A: Außenschicht
- KS1-KS3: Schichten der Kernschicht KS
- HVk: Haftvermittlerschicht
- HVi: Haftvermittlerbeschichtung
- Z: Zusatzschicht
- S: Stahlblech
- HVs: Haftvermittlerschicht
- PS: Polyester-Schicht
- HVz: Haftvermittlerschicht
- HVp: Haftvermittlerschicht
- U: Umgebung

## Patentansprüche

1. Isolierpaneel zur Verwendung für einen Nutzfahrzeugaufbau (5), mit einer der Umgebung (U) des jeweiligen Fahrzeugaufbaus zugeordneten äußeren Decklage (D1,D1',D1") und mit einer inneren Decklage (D2,D2',D2"), die einem von dem Fahrzeugaufbau umgrenzten Laderaum (13) zugeordnet ist, wobei die innere und die äußere Decklage (D1,D2;D1',D2';D1",D2") jeweils aus mehr als zwei aufeinander liegenden Schichten bestehen, sowie mit einer zwischen den Decklagen (D1,D2;D1',D2';D1",D2") angeordneten Kernlage (K) aus einem thermisch isolierenden Material, **dadurch**
**gekennzeichnet, dass** mindestens eine der Decklagen (D1,D2;D1';D1") als mindestens dreischichtiges Sandwich aufgebaut ist, das
- eine der jeweiligen Außenseite (Au,Ar) des Isolierpaneels (P1,P2,P3) zugeordnete Außenschicht (A) aus einem Leichtmetallwerkstoff,
- eine der Kernlage (K) zugeordnete Innenschicht (I) aus einem Leichtmetallwerkstoff
und
- eine stoffschlüssig mit der Außenschicht (A) und der Innenschicht (I) verbundene Kernschicht (KS) umfasst, die aus einem Kernschichtwerkstoff besteht, der eine höhere Festigkeit aufweist als der Leichtmetallwerkstoff der Außen- und Innenschicht (A,I).

2. Isolierpaneel nach Anspruch 1, **dadurch**
**gekennzeichnet, dass** die Innenschicht (I) der mindestens einen als Sandwich ausgebildeten Decklage (D1,D2,D1',D1") stoffschlüssig an die Kernlage (K) des Isolierpaneels (P1,P2,P3) angebunden ist.

3. Isolierpaneel nach einem der voranstehenden Ansprüche, **dadurch**
**gekennzeichnet, dass** die der Kernlage (K) zugeordnete Seitenfläche der Innenschicht (I) der jeweils als Sandwich aufgebauten Decklage (D1,D2,D1',D1") eben ist.

4. Isolierpaneel nach einem der voranstehenden Ansprüche, **dadurch**
**gekennzeichnet, dass** die jeweils als Sandwich aufgebaute Decklage (D1,D2,D1',D1") ausschließlich stoffschlüssig an die Kernlage (K) angebunden ist.

5. Isolierpaneel nach einem der voranstehenden Ansprüche, **dadurch**
**gekennzeichnet, dass** für die stoffschlüssige Anbindung der jeweiligen Decklage (D1,D2;D1',D2';D1",D2") an die Kernlage (K) zwischen der jeweiligen Decklage (D1,D2;D1',D2';D1",D2") und der Kernlage (K) eine Zwischenschicht (I) vorgesehen ist, über die die Kernlage (K) stoffschlüssig an die jeweilige Decklage (D1,D2;D1',D2';D1",D2") angebunden ist, indem die an die Kernlage (K) grenzende Seite der Zwischenlage (I) affin zum an sie grenzenden Werkstoff der Kernlage (K) und die an die Decklage (D1,D2;D1',D2';D1",D2") grenzende Seite der Zwischenlage (I) affin zum Werkstoff der ihr zugeordneten Schicht (KS) der Decklage (D1,D2;D1',D2';D1",D2") ist.

6. Isolierpaneel nach einem der voranstehenden Ansprüche, **dadurch**
**gekennzeichnet, dass** für die stoffschlüssige Anbindung der Außenschicht (A) oder der Innenschicht (I) an die Kernschicht (KS) bei mindestens einer der als Sandwich ausgebildeten Decklagen (D1,D2,D1',D1") zwischen der Außenschicht (A) und der Kernschicht (KS) oder der Innenschicht (I) und der Kernschicht (KS) eine Haftvermittlerschicht (HVk) vorgesehen ist.

7. Isolierpaneel nach einem der voranstehenden Ansprüche, **dadurch**
**gekennzeichnet, dass** der Leichtmetallwerkstoff, aus dem die Innenschicht (I) oder die Außenschicht (A) der jeweils als Sandwich aufgebauten Decklage (D1,D2;D1',D2';D1",D2") besteht, ein Al-Werkstoff ist.

8. Isolierpaneel nach einem der voranstehenden Ansprüche, **dadurch**
**gekennzeichnet, dass** der Kernschichtwerkstoff ein faser- oder gewebeverstärkter Kunststoff ist.

9. Isolierpaneel nach Anspruch 8, **dadurch**
**gekennzeichnet, dass** der Kernschichtwerkstoff ein faserverstärkter Polymerwerkstoff, insbesondere ein Thermoplastwerkstoff, ein Polypropylenwerkstoff oder ein Polyesterwerkstoff ist.

10. Isolierpaneel nach einem der Ansprüche 1 bis 7,
**dadurch gekennzeichnet, dass** der Kernschichtwerkstoff im Bereich eines in das erfindungsgemäße Isolierpaneel einbezogenen Funktionselements ein Stahlblech ist.

11. Isolierpaneel nach einem der voranstehenden Ansprüche, **dadurch**
**gekennzeichnet, dass** die Kernschicht (KS) aus zwei oder mehr stoffschlüssig miteinander verbundenen unterschiedlichen Schichten (KS1,KS2,KS3) aufgebaut ist.

12. Isolierpaneel nach einem der voranstehenden Ansprüche, **dadurch**
**gekennzeichnet, dass** eine Decklage (D1,D2,D1',D1") als Sandwich gemäß einem der voranstehenden Ansprüche ausgebildet ist und die andere Decklage (D2',D2") als eine stoffschlüssig mit der Kernlage (K) verbundene einlagige Deckschicht ausgebildet ist, die aus einem formsteifen Werkstoff besteht.

13. Isolierpaneel nach einem der voranstehenden Ansprüche, **dadurch**
**gekennzeichnet, dass** mindestens eine der Decklagen (D1,D2;D1',D2';D1",D2") auf ihrer von der Kernlage (K) abgewandten Außenseite (Ar,Au) mit einer Zusatzschicht (Z) belegt ist.

14. Nutzfahrzeug zum Transport von
temperaturempfindlichen Gütern umfassend ein Chassis (4), an dem die Räder des Nutzfahrzeugs (1) gelagert sind, und einen vom Chassis (4) getragenen Nutzfahrzeugaufbau (5), der mit seinen Seitenwänden (7,8,9,11), seinem Boden (6) und seinem Dach (12) einen Laderaum (13) umschließt, in dem zum Transport die jeweils zu transportierenden Güter verstaut sind, wobei mindestens eine der Seitenwände (7,8) oder das Dach (12) aus mindestens einem gemäß einem der voranstehenden Ansprüche ausgebildeten Isolierpaneel (P1,P2,P3) gebildet ist.

15. Nutzfahrzeug nach Anspruch 14, **dadurch**
**gekennzeichnet, dass** es mit einer Temperiereinrichtung ausgestattet ist, die die Temperatur der im Laderaum (13) vorhandenen Atmosphäre in einem bestimmten Bereich hält.

## Claims

1. Insulating panel for use with a commercial vehicle superstructure (5), with an outer top layer (D1, D1', D1") associated with the environment (U) of the respective vehicle superstructure and an inner top layer (D2, D2', D2"), associated with a load compartment (13) surrounded by the vehicle superstructure, wherein the inner and the outer top layer (D1, D2; D1', D2'; D1", D2") in each case comprise more than two plies positioned on top of each other, and with a core layer (K) disposed between the top layers (D1, D2; D1', D2'; D1", D2") in a thermally insulating material, **characterised in that** at least one of the top layers (D1, D2; D1'; D1") is constructed as at least a three-ply sandwich which comprises
- an outer ply (A) in a light metal material associated with the respective outside (Au, Ar) of the insulating panel (P1, P2, P3),
- an inner play (I) in a light metal material associated with the core layer (K)
and
- a core ply (KS) having an integrally joined connection with the outer ply (A) and inner ply (I), consisting of a core ply material, having a higher strength than the light metal material of the outer and inner ply (A, I).

2. Insulating panel according to claim 1, **characterised in that** the inner ply (I) of the at least one top layer (D1, D2, D1', D1") constructed as a sandwich has an integrally joined connection to the core layer (K) of the insulating panel (P1, P2, P3).

3. Insulating panel according to one of the above claims, **characterised in that** the surface of the inner ply (I) of the respective top layer (D1, D2, D1', D1") constructed as a sandwich associated with the core ply (K) is smooth.

4. Insulating panel according to one of the above claims, **characterised in that** the respective top layer (D1, D2, D1', D1") constructed as a sandwich has an exclusively integrally joined connection to the core layer (K).

5. Insulating panel according to one of the above claims, **characterised in that** for the integrally joined connection of the respective top layer (D1, D2; D1', D2'; D1", D2") to the core layer (K) between the respective top layer (D1, D2; D1', D2'; D1", D2") and the core layer (K) an intermediate ply (I) is provided, via which the core layer (K) makes an integrally joined connection to the respective top layer (D1, D2; D1', D2'; D1", D2"), **in that** the side of the intermediate layer (I) adjoining the core layer (K) has an affinity to the material adjoining it and the side of the intermediate layer (I) adjoining the top layer (D1, D2; D1', D2'; D1", D2") has an affinity to the material of the ply (KS) of the top layer (D1, D2; D1', D2'; D1", D2") associated with it.

6. Insulating panel according to one of the above claims, **characterised in that** for the integrally joined connection of the outer ply (A) or the inner ply (I) to the core ply (KS) in at least one of the top layers (D1, D2, D1', D1") constructed as a sandwich between the outer ply (A) and the core ply (KS) or the inner ply (I) and the core ply (KS) a bonding agent ply (HVk) is provided.

7. Insulating panel according to one of the above claims, **characterised in that** the light metal material, of which the inner ply (I) or the outer ply (A) of the respective top layer constructed as a sandwich (D1, D2; D1', D2'; D1", D2") is comprised, is an aluminium material.

8. Insulating panel according to one of the above claims, **characterised in that** the core ply material is a fibre- or fabric-reinforced plastic.

9. Insulating panel according to claim 8, **characterised in that** the core ply material is a fibre-reinforced polymer material, in particular a thermoplastic material, a polypropylene material or a polyester material.

10. Insulating panel according to one of claims 1 to 7, **characterised in that** the core ply material in the area of a functional element incorporated into the insulating panel according to the invention is a steel sheet.

11. Insulating panel according to one of the above claims, **characterised in that** the core ply (KS) is constructed from two or more different plies (KS1, KS2, KS3) with an integrally joined connection to one another.

12. Insulating panel according to one of the above claims, **characterised in that** one top layer (D1, D2, D1', D1") is constructed as a sandwich according to one of the above claims and the other top layer (D2', D2") is constructed as a single-layer top ply having an integrally joined connection to the core layer (K), consisting of an inherently stable material.

13. Insulating panel according to one of the above claims, **characterised in that** at least one of the top layers (D1, D2; D1', D2'; D1", D2") on its outside (Ar, Au) turned away from the core layer (K) is coated with an additional ply Z).

14. Commercial vehicle for the transport of temperature-sensitive goods comprising a chassis (4), on which the wheels of the commercial vehicle (1) are mounted, and a commercial vehicle superstructure (5) supported by the chassis (4), which with is side walls (7, 8, 9, 11), its floor (6) and its roof (12) surrounds a load compartment (13), in which the respective goods to be transported are stowed for transport, wherein at least one of the side walls (7, 8) or the roof (12) is constructed from at least one insulating panel (P1, P2, P3) constructed according to one of the above claims.

15. Commercial vehicle according to claim 14, **characterised in that** it is equipped with a temperature control, which keeps the temperature of the atmosphere in the load compartment (13) within in a certain range.

## Revendications

1. Panneau isolant destiné à une caisse de véhicule utilitaire (5), comportant une couche de recouvrement extérieure (D1, D1', D1") associée à l'environnement proche (U) de la caisse de véhicule utilitaire concernée et une couche de recouvrement intérieure (D2, D2', D2"), laquelle est associée à un espace de chargement (13) délimité par la caisse de véhicule utilitaire, auquel cas les couches de recouvrement intérieure et extérieure (D1, D2 ; D1', D2'; D1", D2") sont respectivement composées de plus de deux strates superposées, ainsi que d'une couche centrale (K) composée d'un matériau d'isolation thermique et agencée entre les couches de recouvrement (D1, D2 ; D1', D2' ; D1", D2"), **caractérisé en ce qu'**au moins une des couches de recouvrement (D1, D2 ; D1' ; D1") est conçue en tant qu'une structure en sandwich à au moins trois strates, la quelle comporte
- une strate extérieure (A) associée au côté extérieur concerné (Au, Ar) du panneau isolant (P1, P2, P3) composée d'un matériau métallique léger,
- une strate intérieure (I) associée à la couche centrale (K) composée d'un matériau métallique léger,
et
- une strate centrale (KS) reliée par liaison de matière à la strate extérieure (A) et à la strate intérieure (I) et composée d'un matériau de strate centrale qui présente une résistance plus élevée que celle du matériau métallique léger des strates intérieure et extérieure (A, I).

2. Panneau isolant selon la revendication 1, **caractérisé en ce que** la strate intérieure (I) d'au moins une couche de recouvrement (D1, D2, D1', D1") conçue en tant que structure en sandwich est rattachée par liaison de matière à la couche centrale (K) du panneau isolant (P1, P2, P3).

3. Panneau isolant selon l'une quelconque des revendications précédentes, **caractérisé en ce que** la surface latérale, associée à la couche centrale (K), de la strate intérieure (I) de la couche de recouvrement (D1, D2, D1', D1"), respectivement conçue en tant que structure en sandwich, est plane.

4. Panneau isolant selon l'une quelconque des revendications précédentes, **caractérisé en ce que** la couche de recouvrement (D1, D2, D1', D1"), conçue respectivement en tant que structure en sandwich, est rattachée exclusivement par liaison de matière à la couche centrale (K).

5. Panneau isolant selon l'une quelconque des revendications précédentes, **caractérisé en ce que** pour le rattachement par liaison de matière de la couche de recouvrement respective (D1, D2 ; D1', D2' ; D1", D2") à la couche centrale (K) entre la couche de recouvrement respective (Dl , D2 ; D1', D2' ; D1", D2") et la couche centrale (K), l'on prévoit une strate intermédiaire (I), par la quelle la couche centrale (K) est rattachée par liaison de matière à la couche de recouvrement respective (D1, D2 ; D1', D2' ; D1", D2"), notamment par le côté de la strate intermédiaire (I) adjacent à la couche centrale (K) qui est affin au matériau de la couche centrale (K) lui étant adjacent et par le côté de la strate intermédiaire (I) adjacent à la couche de recouvrement (D1, D2 ; D1', D2' ; D1",D2") qui est affin au matériau de la strate (KS) de la couche de recouvrement (D1, D2 ; D1', D2' ; D1", D2") lui étant associé (KS).

6. Panneau isolant selon l'une quelconque des revendications précédentes, **caractérisé en ce que** pour le rattachement par liaison de matière de la strate extérieure (A) ou de la strate intérieure (I) à la strate centrale (KS) l'on prévoit une couche de promoteur d'adhésion (HVk) lors d'au moins une couche de recouvrement (D1, D2, D1', D1") conçue en tant que structure en sandwich entre la strate extérieure (A) et la strate centrale (KS) ou la strate intérieure et la strate centrale (KS).

7. Panneau isolant selon l'une quelconque des revendications précédentes, **caractérisé en ce que** le matériau métallique léger, à partir duquel se compose la strate intérieure (I) ou la strate extérieure (A) de la couche de recouvrement (D1, D2 ; D1', D2' ; D1", D2") conçue respectivement en tant que structure en sandwich, est un matériau à base de Al.

8. Panneau isolant selon l'une quelconque des revendications précédentes, **caractérisé en ce que** le matériau de strate centrale est une matière synthétique renforcée par du tissu ou des fibres.

9. Panneau isolant selon la revendication 8, **caractérisé en ce que** le matériau de la strate centrale est un matériau polymère renforcé par des fibres, notamment un matériau thermoplastique, un matériau polypropylène ou un matériau en polyester.

10. Panneau isolant selon une des revendications de 1 à 7 **caractérisé en ce que** le matériau de la strate centrale dans la zone d'un élément fonctionnel incorporé dans le panneau isolant conforme à l'invention est une tôle en acier.

11. Panneau isolant selon l'une quelconque des revendications précédentes, **caractérisé en ce que** la strate centrale (KS) est conçue à partir de deux ou plusieurs strates différentes (KS1, KS2, KS3) mutuellement reliées par liaison de matière.

12. Panneau isolant selon l'une quelconque des revendications précédentes, **caractérisé en ce qu'**une couche de recouvrement (D1, D2, D1', D1") est conçue en tant que structure en sandwich selon une des revendications précédentes et que l'autre couche de recouvrement (D2', D2") est conçue en tant que strate de recouvrement à une couche reliée par liaison de matière avec la couche centrale (K), cette strate de recouvrement se composant d'un matériau rigide.

13. Panneau isolant selon l'une quelconque des revendications précédentes, **caractérisé en ce qu'**au moins une des couches de recouvrement (D1, D2 ; D1', D2' ; D1", D2") est revêtue sur son côté extérieur (Ar, Au) opposé à la couche centrale (K) d'une strate additionnelle (Z).

14. Véhicule utilitaire destiné au transport de produits sensibles aux variations de température comportant un châssis (4) sur lequel sont logées les roues du véhicule utilitaire (1), et une caisse de véhicule utilitaire (5) portée par le châssis (4) qui renferme avec ses parois latérales (7, 8, 9, 11), son fond (6) et son toit (12) un espace de chargement (13) dans lequel sont disposés pour le transport les produits respectivement à transporter, auquel cas au moins une des parois latérales (7,8) ou le toit (12) est conçu à partir d'au moins un panneau isolant (P1, P2, P3) selon une des revendications précédentes.

15. Véhicule utilitaire selon la revendication 14, **caractérisé en ce qu'**il est équipé d'un dispositif de régulation de température qui maintient la température de l'atmosphère présente dans l'espace de chargement (13) dans une certaine plage de température.
